# EUROPÄISCHE PATENTSCHRIFT

(11) **EP 3 545 537 B1**
(45) Veröffentlichungstag und Bekanntmachung des Hinweises auf die Patenterteilung: **03.11.2021**
(21) Anmeldenummer: 17801446.0
(22) Anmeldetag: 20.11.2017
(51) Int. Cl.: H01F 27/28, H01F 38/14, B60L 53/124, H01F 3/10, H02J 50/12

(54) **INDUKTIVES BAUELEMENT UND SEKUNDÄRRESONATOREINRICHTUNG ZUR MONTAGE AN EINEM ELEKTROKRAFTFAHRZEUG**
INDUCTIVE COMPONENT AND SECONDARY RESONATOR DEVICE FOR INSTALLING ON AN ELECTRIC VEHICLE
COMPOSANT INDUCTIF ET DISPOSITIF RÉSONATEUR SECONDAIRE À MONTER SUR UN VÉHICULE AUTOMOBILE ÉLECTRIQUE

(30) Priorität: 28.11.2016 DE 102016223534
(43) Veröffentlichungstag der Anmeldung: 02.10.2019
(73) Patentinhaber: SUMIDA Components & Modules GmbH, 94130 Obernzell (DE)
(72) Erfinder: WEBER, Mathias, 94121 Salzweg (DE); UCZULKO, Marco, 94469 Deggendorf (DE)
(74) Vertreter: Grünecker Patent- und Rechtsanwälte PartG mbB
(86) Internationale Anmeldenummer: PCT/EP2017/079734
(87) Internationale Veröffentlichungsnummer: WO 2018/095846

(56) Entgegenhaltungen:
- WO-A1-2013/133254
- DE-U1-202016 101 808
- US-A1- 2016 336 818

## Beschreibung

### Gebiet der Erfindung

Die vorliegende Erfindung betrifft ein induktives Bauelement mit einem plattenförmigen Ferritkern und einer über dem plattenförmigen Ferritkern angeordneten Hybrid-Doppel-D-Solenoid-Spule. Weiterhin betrifft die vorliegende Erfindung eine Sekundärresonatoreinrichtung zur Montage an einem Elektrokraftfahrzeug mit einem entsprechenden induktiven Bauelement.

### Hintergrund

Aufgrund des zunehmenden Anteils an elektrischem Strom, der aus regenerativen Energiequellen erzeugt wird, und weitgreifenden internationalen Abkommen zur Reduzierung von Treibhausgasen gewinnen Elektrokraftfahrzeuge, d.h. Kraftfahrzeuge mit Elektroantrieb, zunehmend an Bedeutung. Elektroautos stellen Beispiele für Elektrokraftfahrzeuge dar, die weiterhin Kraftfahrzeuge zur Personen- und Güterbeförderung, wie z.B. U-Bahnzüge, Fahrräder mit Elektroantrieb und dergleichen, umfassen. Im Allgemeinen ist unter einem Elektroauto ein Kraftfahrzeug zur Personenbeförderung mit mindestens vier Rädern zu verstehen, das von einem Elektromotor als sog. Elektroantrieb angetrieben wird und das die zu seiner Fortbewegung notwendige elektrische Energie in einer aus mehreren zusammengeschalteten Akkumulatorzellen oder Zellenblöcken bestehenden Traktionsbatterie speichert. Da diese Fahrzeuge im Betrieb selbst keine relevanten Schadstoffe emittieren, werden sie gegenüber treibstoffbetriebenen Fahrzeugen als emissionsfreie Fahrzeuge eingestuft.

Obgleich elektronisch gesteuerte Elektromotoren gegenüber Verbrennungsmotoren das maximale Drehmoment schon im Stillstand abgeben und daher, anders als im Fall eines Antriebs durch Verbrennungsmotoren, in der Regel kein Schaltgetriebe erforderlich ist, sowie Elektromotoren im Betrieb gegenüber Verbrennungsmotoren leiser und fast vibrationsfrei sind, ohne direkt schädlichen Abgase zu emittieren, stellt die vergleichsweise wenig ausgebaute und uneinheitlich geregelte Ladeinfrastruktur und die daraus resultierende geringe Flexibilität für Nutzer von Elektrofahrzeugen zur spontanen Bewältigung längerer Strecken ein Hemmnis in der Marktakzeptanz dar.

Ein weiterer bedeutender Unterschied zwischen elektrischen und kraftstoffbetriebenen Fahrzeugen besteht im Vergleich von Ladezeiten und Tankzeiten zum Füllen der Energiespeicher. Hier stehen sich derzeitig beispielsweise wenige Minuten in der Tankzeit und mehrere zehn Minuten (gegenwärtig ca. 30 Minuten zur 80 %-igen Akkuladung an leistungsstarken Gleichstrom-Ladestationen) gegenüber.

Bezüglich des Ladens von Elektrokraftfahrzeugen sind zwar alle Ladesysteme auf einer Norm aufgebaut, jedoch existieren bei Ladesteckern unterschiedliche Typen, die speziell für Elektrofahrzeuge geschaffen wurden. Hierdurch ergeben sich derzeitig verschiedene zur Verfügung stehende Ladeoptionen, die jedoch stark von Hersteller und Modell abhängig sind.

Gegenüber kraftstoffbetriebenen Fahrzeugen besteht die Möglichkeit, eine "Stromtankstelle" bzw. Ladestation zweckmäßigerweise an Orten anzuordnen, an denen viele Fahrzeuge auch bei Nichtnutzung untergebracht sind, wie etwa eine Garagen oder fest zugewiesenen Stellplätze bzw. Firmenparkplätze bei Firmenfahrzeugen. Es können zwar nahezu alle Elektroautos auch an jeder normalen Haushaltssteckdose aufgeladen werden, jedoch erlaubt eine im Haushaltsbereich übliche einphasige Steckverbindung mit einer Absicherung von 16 A maximal die Übertragung von 2,3 kW, so dass ein Aufladen eines Elektroautos an der Haushaltssteckdose generell mehrere Stunden benötigen würde. Weiterhin ist beim Laden an der Haushaltssteckdose auch noch zu beachten, dass an den Stromkreis der Haushaltssteckdose eventuell bereits andere Verbraucher im Haushalt angeschlossen sind und sich damit Beschränkungen für eine dauerhafte, insbesondere über mehrere Stunden hinweg erfolgende Belastung des Stromnetz an der Haushaltsteckdose zum Laden einer Elektroautos ergeben.

Es scheint nicht unvernünftig, davon auszugehen, dass eine Steigerung der Akzeptanz von Elektroautos unter anderem an eine Steigerung der Elektromobilität gekoppelt ist und eine Verbesserung der Benutzerfreundlichkeit von Elektrofahrzeugen hier großen Einfluss entfalten kann.

Ein Ansatz zur Verbesserung bietet z.B. das berührungslose Laden ohne offene Kontakte, bei dem während der Fahrt oder beim Parken mittels Induktion berührungslos Energie auf das Auto zum Laden der Akkumulatoren an Bord des Elektrokraftzeugs übertragen wird. Da hier die Handhabung mit Steckern und Ladekabeln für den Benutzer entfällt, ergeben sich Möglichkeiten zur Steigerung der Marktakzeptanz.

Ein berührungsloses Ladesystem für Elektroautos umfasst im Allgemeinen eine Primärresonatoreinrichtung, die zur Abgabe von elektrischer Energie konfiguriert ist, und eine Sekundärresonatoreinrichtung, die zur Aufnahme der von der Primärresonatoreinrichtung abgegeben elektrischen Energie ausgebildet ist.

Bei der drahtlosen Energieübertragung wird grundsätzlich zwischen zwei Prinzipien unterscheiden, die sich in den physikalischen Eigenschaften unterscheiden: Erstens die drahtlose Energieübertragung im Nahfeld, auch als nichtstrahlende Kopplung bezeichnet. Hierzu zählt z.B. die induktive Kopplung basierend auf dem magnetischen Fluss, der in der Primärresonatoreinrichtung erzeugt und von der Sekundärresonatoreinrichtung erfasst wird. Zweitens die Energieübertragung im Fernfeld, auch als strahlende Energieübertragung bezeichnet, welche auf elektromagnetischen Wellen basiert.

Die drahtlose Energieübertragung im Nahfeld (vgl. erstens oben) ist bezüglich der Reichweite der Energieübertragung auf Abstände beschränkt, die gegenüber der Wellenlänge der energieübertragenden Strahlung klein sind.

Die Energieübertragung im Fernfeld ist auf die Übertragung vergleichsweise kleiner Leistungen begrenzt, da die sog. Freiraumdämpfung (d.h. die Reduzierung der Leistungsdichte bei der Ausbreitung elektromagnetischer Wellen im freien Raum ohne Störeinflüsse von zusätzlich dämpfenden Medien oder Störungen durch Reflexion) nur einen sehr geringen Wirkungsgrad von weniger als 1 % zulässt.

Derzeitige Ladesysteme sind daher zum kontaktlosen Laden von Elektrofahrzeugen auf die Nahfeldübertragung von elektromagnetischer Energie durch hauptsächlich induktive Kopplung gerichtet, bei der eine Primärspule oder Sendespule in den Untergrund, z.B. Fahrbahnbelag oder Parkplatz, eingelassen ist, während eine Sekundärspule oder Empfängerspule am Elektrofahrzeug, beispielsweise am Unterboden, angebracht ist. Im privaten Bereich ist auch eine Aufbodenmontage möglich, wobei die Primär- oder Sendespule wenigstens teilweise aus dem Untergrund herausragt.

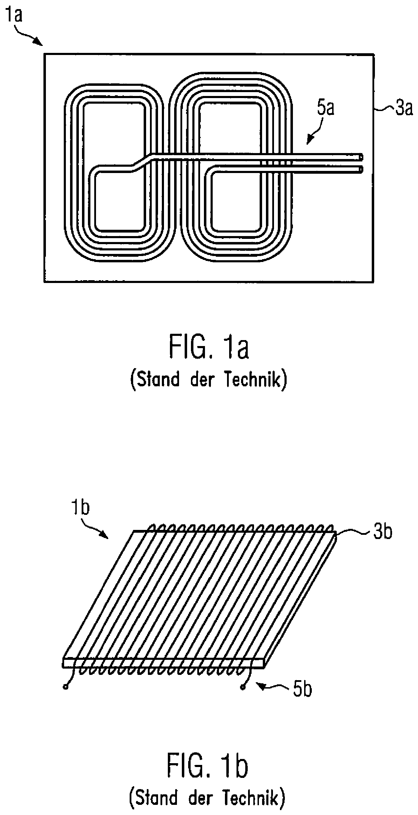

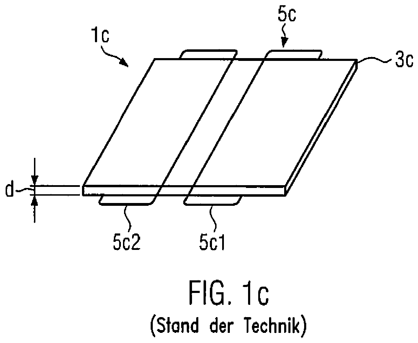

Hinsichtlich der Fig. 1a, 1b und 1c werden im Folgenden bekannte Spulendesigns für Primär- und/oder Sekundärspulen beschrieben.

Fig. 1a zeigt schematisch eine Aufsicht auf eine Spule 1a gemäß einem sog. "Doppel-D-Spulendesign". Hierbei ist eine Wicklung 5a auf einem magnetischen Kern 3a entsprechend dem dargestellten Design angeordnet, insbesondere wird der magnetische Kern 3a nicht von den einzelnen Windungen der Wicklung 5a umlaufen.

Fig. 1b zeigt schematisch eine Spule 1b gemäß einem sog. "Solenoid-Spulendesign", gemäß welchem eine Wicklung 5b über einem magnetischen Kern 3b angeordnet ist, so dass die einzelnen Windungen der Wicklung 5b den magnetischen Kern 3b umlaufen.

Fig. 1c zeigt eine Spule 1c gemäß einem sog. "Hybrid-Doppel-D-Solenoid-Spulendesign", welches eine Mischung zwischen dem Doppel-D-Spulendesign in Fig. 1a und dem Solenoid-Spulendesign in Fig. 1b darstellt. Hierbei umfasst die Spule 1c eine Wicklung 5c über einem magnetischen Kern 3c, umfassend eine Windung 5c1 und eine weitere Windung 5c2, wobei die Windungen 5c1 und 5c2 schräg zum magnetischen Kern 3c gewickelt sind. Dies bedeutet, dass eine Windungsachse von jeder der Windungen 5c1, 5c2, d.h. eine Achse senkrecht zu einer Ebene, in der die Windungen 5c 1 und 5c 2 jeweils liegen, um weniger als 45 ° von einer Dickenrichtung abweicht, die in Fig. 1c mit dem Bezugszeichen d bezeichnet ist.

Demgegenüber ist hinsichtlich Fig. 1b ersichtlich, dass eine Windungsachse der Wicklung 5b im Wesentlichen senkrecht zur Dickenrichtung des magnetischen Kerns 3b (entsprechend wäre "d" in Fig. 1c auch für Fig. 1b zu definieren) orientiert ist, insbesondere ist die Windungsachse der Wicklung 5b, d.h. eine Achse senkrecht zu einer Ebene, in der die Windungen der Wicklungen 5b liegen, unter einem Winkel von mehr als 45 ° zur Dickenrichtung orientiert.

Bekannte Spulentopologien zur kabellosen Energieübertragung sind z.B. in der Druckschrift WO 2015/094964 A1 oder in der Druckschrift WO2016182779 A1 beschrieben.

Eine Vorrichtung zum drahtlosen Laden von Elektrofahrzeugen ist beispielsweise in der Schrift WO 2016/114893 A1 beschrieben.

Eine Sekundärvorrichtung für eine Ladevorrichtung zum Laden von Elektrofahrzeugen ist beispielsweise aus der Druckschrift EP 2858078 A1 bekannt.

Angesichts einer Verbesserung der Elektromobilität besteht eine Aufgabe darin, ein spezielles Spulendesign zum induktiven Laden eines Elektrofahrzeugs, z.B. eines Elektroautos, bereitzustellen, wobei unter einem verbesserten Wirkungsgrad eine verbesserte Ausgangsleistung, beispielweise ab 7 kW, unter gleichzeitiger Einhaltung einer kompakten Bauweise übertragen werden kann. Weiterhin besteht eine Aufgabe zur Bereitstellung eines Spulendesigns, welches eine Eigenerwärmung aufgrund von Verlustleistungen wenigstens verringert.

Dabei sind bei der Entwicklung von Ladesystemen unter anderen Gesichtspunkten Rahmenbedingungen, wie z.B. ein vorgegebener Bauraum, eine vorgegebene Mindesteffizienz, eine vorgegebene Mindestübertragungsleistung, eine vorgegebenen Mindestspannungsfestigkeit, Anforderungen an die Stabilität usw., einzuhalten.

### Kurze Zusammenfasssung der Erfindung

Die vorangegangenen Probleme und Aufgaben werden im Rahmen der vorliegenden Erfindung gelöst durch ein induktives Bauelement gemäß dem unabhängigen Anspruch 1 und eine Sekundärresonatoreinrichtung zur Montage an einem Elektrofahrzeug gemäß dem nebengeordneten Anspruch 10. Weitere vorteilhaftere Ausgestaltungen des induktiven Bauelements sind in den abhängigen Ansprüchen 2 bis 9 definiert.

In einem Aspekt der vorliegenden Erfindung wird ein induktives Bauelement für ein berührungsloses Ladesystem für Elektroautos mit einem plattenförmigen Ferritkern und einer über dem plattenförmigen Ferritkern angeordneten Hybrid-Doppel-D-Solenoid-Spule mit einem Design, das eine Mischung zwischen einem Doppel-D-Spulendesign und einem Solenoid-Spulendesign darstellt, bereit gestellt, wobei die Hybrid-Doppel-D-Solenoid-Spule eine Mehrzahl von Windungen aufweist, wobei die Mehrzahl von Windungen in mindestens zwei Gruppen jeweils aus mindestens zwei unmittelbar aufeinanderfolgenden Windungen gruppiert ist. Für die Windungen in einer Gruppe gilt dabei, dass Windungsdurchmesser monoton zunehmen oder abnehmen, wobei beim Übergang einer letzten Windung einer Gruppe zur unmittelbar folgenden ersten Windung der unmittelbar nachfolgenden Gruppe gilt, dass der Windungsdurchmesser abnimmt (im Fall monoton zunehmender Windungsdurchmesser in den Gruppen) oder zunimmt (im Fall monoton abnehmender Windungsdurchmesser in den Gruppen). Dies erlaubt eine eindeutige Zuordnung einzelner Windungen der Hybrid-Doppel-D-Solenoid-Spule zu Gruppen. Die entsprechend definierte Gruppierung der Mehrzahl von Windungen realisiert eine ineinander verschachtelte bzw. verteilte Wicklung bei der Spulenwicklung, wobei ein übermäßiger Platzbedarf der Windungen durch eine anwachsende Ausbauchung aufgrund von stetig wachsenden Windungsdurchmessern verhindert wird. Demgegenüber steigen die Windungen aufgrund des Wicklungsschemas mit Gruppen lediglich innerhalb der Gruppen abhängig von einer Anzahl von Windungen je Gruppe auf einen maximalen Windungsdurchmesser an.

Demgegenüber führt das bekannte Doppel-D-Spulendesign, wie es beispielsweise in Fig. 1a dargestellt ist, zu Windungsdurchmessern, die proportional zu der Anzahl von Windungen größer werden.

In einer vorteilhaften Ausführungsform des oben beschriebenen induktiven Bauelements weist der plattenförmige Ferritkern mindestens eine Abstufung auf, die von der Hybrid-Doppel-D-Solenoid-Spule teilweise überlagert wird. Es lässt sich eine Bauhöhenverringerung an der Abstufung erreichen.

In einer anschaulichen Ausgestaltung hierin ist die mindestens eine Abstufung in jeweils zwei zueinander gegenüberliegenden Flächen des plattenförmigen Ferritkerns gebildet, die senkrecht zu einer Dickenrichtung des plattenförmigen Ferritkerns orientiert sind. Dabei stellt die mindestens eine Abstufung in jeder der zwei zueinander gegenüberliegenden Flächen entlang der Dickenrichtung einen Versatz bereit. Dies stellt eine einfache und effiziente Möglichkeit zur Bereitstellung der Abstufung unter Optimierungsgesichtspunkten hinsichtlich der Bauhöhe dar.

In einer weiteren vorteilhaften Ausführungsform des induktiven Bauelements umfasst die Hybrid-Doppel-D-Solenoid-Spule eine über dem plattenförmigen Ferritkern angeordnete erste Wicklung mit einer ersten Mehrzahl von Windungen und ersten Anschlusskontakten und eine zweite Wicklung mit einer zweiten Mehrzahl von Windungen und zweiten Anschlusskontakten. Hierbei sind die ersten und zweiten Anschlusskontakte mit Anschlüssen des induktiven Bauelements derart verbunden, dass die erste Wicklung und die zweite Wicklung unter Anlegen einer Spannung an die Anschlüsse unter einem relativ zueinander entgegengesetzten Drehsinn von einem elektrischen Strom durchflossen werden. Die erste Wicklung und zweite Wicklung des Hybrid-Doppel-D-Solenoid-Spulendesigns gemäß dem oben beschriebenen Aspekt der Erfindung werden hierbei parallel mit Anschlüssen verbunden, so dass eine Verringerung des ohmschen Widerstands entlang des Hybrid-Doppel-D-Solenoid-Spulendesigns erreicht wird und Verlustleistung verringert ist.

Die hierbei definierte Anschlusskonfiguration, demgemäß die erste Wicklung und die zweite Wicklung unter Anlegung eines Spannungsabfalls an die Anschlüsse des induktiven Bauelements unter einem, relativ zueinander entgegengesetzten Drehsinn von einem elektrischen Strom durchflossen werden, erlaubt im Betrieb eine Magnetfeldkonfiguration, die eine vorteilhafte Kopplung mit einem weiteren induktiven Bauelement als Sekundärelement oder Primärelement in einem Ladesystem bewirkt.

In einer anschaulichen Ausgestaltung hierin weist der plattenförmige Ferritkern zwei Polabschnitte, die relativ zu einer Richtung erhalten durch eine Projektion einer Windungsachse der ersten Wicklung und/oder zweiten Wicklung auf den plattenförmigen Ferritkern an entgegengesetzten Enden des plattenförmigen Ferritkerns angeordnet sind, und einen zwischen den Polabschnitten angeordneten Verbindungsabschnitt auf, wobei jeder Polabschnitt unter Ausbildung einer Abstufung im Ferritkern von dem Verbindungsabschnitt entlang einer Dickenrichtung des plattenförmigen Ferritkerns angeordnet ist. Hierin lässt sich eine Optimierung der Bauhöhe unter Aufrechterhaltung vorteilhafter Kopplungseigenschaften mittels der versetzt angeordneten Polabschnitte erreichen.

In einer weiteren anschaulichen Ausgestaltung hierin weist jeder Polabschnitt eine wenigstens teilweise freiliegende Polfläche auf, die senkrecht zur Dickenrichtung orientiert ist und nicht von Windungsabschnitten überlagert wird. Dies ermöglicht ein vorteilhaftes Kopplungsverhalten des induktiven Bauelements an ein weiteres induktives Bauelement, welches als Primär-oder Sekundärelement fungiert.

In einer weiteren vorteilhaften Ausführungsform des induktiven Bauelements ist die Hybrid-Doppel-D-Solenoid-Spule über Flächen des plattenförmigen Ferritkerns, die senkrecht zu einer Dickenrichtung des plattenförmigen Ferritkerns orientiert sind, einlagig gewickelt. Dabei wird in dieser Ausführungsform durch die einlagige Wicklung eine vorteilhafte Bauhöhe entlang der Dickenrichtung erreicht.

In einer weiteren vorteilhaften Ausführungsform des induktiven Bauelements umfasst das induktive Bauelement ferner einen Wickelkörper, der mindestens ein auf einer Fläche des plattenförmigen Ferritkern angeordnetes Halterungselement aufweist, das jeweils eine Mehrzahl von Nuten aufweist, die jeweils genau einen Windungsabschnitt der über dem Halterungselement angeordneten Windungen aufnehmen. Dabei lässt sich eine vorteilhafte Bauhöhe bei gleichzeitiger Bereitstellung einer Isolierung zwischen Windungen zur Vermeidung von Windungskurzschlüssen bereitstellen. Diese Ausführungsform ist besonders vorteilhaft für das induktive Bauelement in der Herstellung.

In einer weiteren vorteilhaften Ausführungsform des induktiven Bauelements werden Leitungsabschnitte, die sich von Anschlusskontakten zu Windungen erstrecken, seitlich innenliegend geführt und von Windungsabschnitten überlagert. Hierin sind die Leitungsabschnitte, die eine Verbindung zwischen Anschlusskontakt und Windung bereitstellen, vor potentiellen Beschädigungen geschützt und gleichzeitig werden laterale Dimensionen senkrecht zur Dickenrichtung des induktiven Bauelements durch eine optimale Ausnutzung von innenliegenden Räumen, die zwischen den Windungen und dem Ferritkern gebildet sind, gering gehalten.

In einem weiteren Aspekt stellt die vorliegende Erfindung eine Sekundärresonatoreinrichtung zur Montage an einem Elektrokraftfahrzeug bereit. Gemäß anschaulichen Ausführungsformen hierin umfasst die Sekundärresonatoreinrichtung ein Gehäuse, ein kapazitives Bauelement und das induktiven Bauelement gemäß dem oben beschriebenen Aspekt, wobei zumindest das induktive Bauelement in das Gehäuse aufgenommen ist.

In diesem Aspekt wird eine Sekundärresonatoreinrichtung mit geringer Bauhöhe und vorteilhaften Kopplungseigenschaften zum Einsatz beim kontaktlosen Laden von Elektrokraftfahrzeugen bereitgestellt. Hierbei kann das Gehäuse je nach Material beispielsweise auch als Abschirmungselement und/oder Wärmesenke genutzt werden.

### Kurze Beschreibung der Figuren

Weitere Vorteile und anschauliche Ausführungsformen der oben dargestellten Aspekte der Erfindung werden nachfolgend mit Bezug auf die beiliegenden Figuren beschrieben, wobei:
- Fig. 1a-1c: schematisch bekannte Spulendesigns darstellen;
- Fig. 2a: eine Aufsicht auf eine induktiven Bauelement gemäß einiger ausführlicher Ausführungsformen der vorliegenden Erfindung darstellt;
- Fig. 2b: eine Unterseitenansicht des induktiven Bauelements gemäß Fig. 2a darstellt;
- Fig. 2c: eine Innenseitenschnittansicht des in den Fig. 2a und 2b dargestellten induktiven Bauelements darstellt;
- Fig. 2d: eine Seitenschnittansicht des Ferritkerns mit Wickelkörper zu den Fig. 2a-2c darstellt;
- Fig. 3a: schematisch in einer Aufsichtsdarstellung ein Wickelschema gemäß anschaulicher Ausführungsformen der vorliegenden Erfindung darstellt;
- Fig. 3b: schematisch das Wickelschema zu Fig. 3a in einer Querschnittansicht darstellt; und
- Fig. 4: schematisch ein Ladesystem zum Laden eines Elektrofahrzeugs gemäß anschaulicher Ausführungsformen der Erfindung darstellt.

### Detaillierte Beschreibung

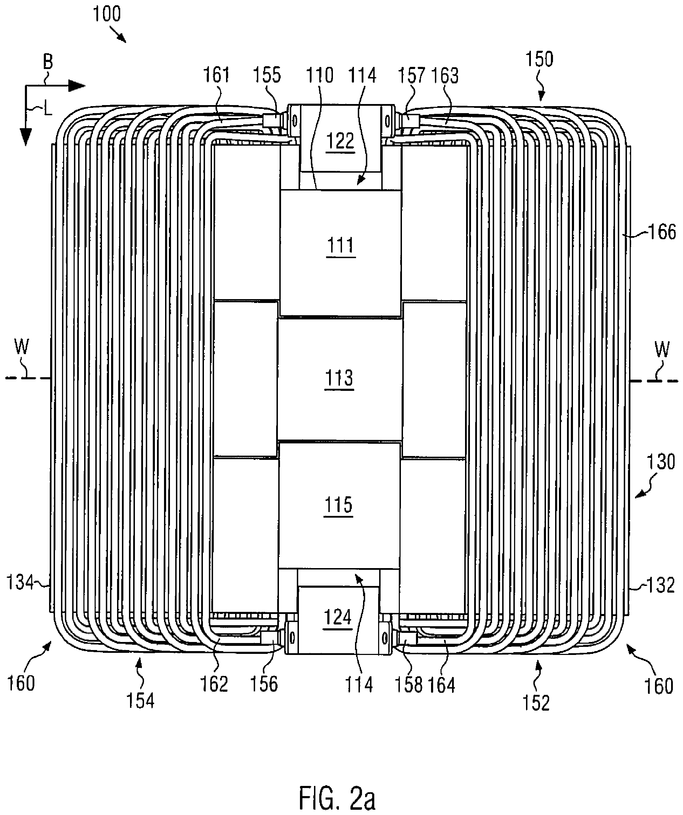

Mit Bezug auf die Fig. 2a bis 2d wird nachfolgend ein induktives Bauelement 100 gemäß verschiedener anschaulicher Ausführungsformen der vorliegenden Erfindung detailliert beschrieben.

Fig. 2a zeigt eine Aufsicht auf eine Oberseite des induktiven Bauelements 100. Mit "Oberseite" wird nachfolgend die Seite des induktiven Bauelements 100 bezeichnet, die zu einer "Unterseite" des induktiven Bauelements 100 gegenüberliegend angeordnet ist, welche wiederum einem weiteren induktiven Bauelement (nicht dargestellt) in einem System zum kontaktlosen Laden eines Elektrofahrzeugs (nicht dargestellt) zugerichtet ist.

In einem anschaulichen Beispiel kann das induktive Bauelement 100 an einem Elektrofahrzeug (nicht dargestellt) angebracht sein. Hier kann z.B. weiterhin das induktive Bauelement 100 derart angebracht sein, dass die Oberseite einem Fahrzeugunterboden zugerichtet ist, während die Unterseite einem Untergrund (nicht dargestellt), etwa einer Fahrbahn, einem Stellplatzboden, einem Garagenboden etc., zugerichtet ist.

In einem anderen anschaulichen Beispiel kann das induktive Bauelement 100 an oder in einem Untergrund (nicht dargestellt), etwa einer Fahrbahn, einem Stellplatzboden, einem Garagenboden etc., angeordnet sein, beispielsweise darin eingelassen sein. Hierbei wäre die Unterseite einem Fahrzeugunterboden (nicht dargestellt) eines Elektrofahrzeugs (nicht dargestellt) zugerichtet.

Das induktive Bauelement 100 umfasst einen plattenförmigen Ferritkern 110 und eine über dem plattenförmigen Ferritkern 110 angeordnete Hybrid-Doppel-D-Solenoid-Spule 150, die eine Mehrzahl von Windungen 160 aufweist. Die Mehrzahl von Windungen 160 wird hierbei aus mehreren Windungen (d.h., mindestens vier Windungen) gebildet. In Fig. 2a ist beispielhaft eine Windung durch das Bezugszeichen 166 bezeichnet. Dementsprechend steht das Bezugszeichen "166" für eine einzelne Windung der Mehrzahl von Windungen 160, gemäß einem anschaulichen und nicht beschränkenden Beispiel für die Windung 166.

Die Mehrzahl von Windungen 160 ist in eine Mehrzahl von Gruppen jeweils aus mehreren unmittelbar aufeinanderfolgenden Windungen in einer Weise gruppiert, auf die weiter unten noch ausführlicher eingegangen wird.

Der plattenförmige Ferritkern 110 ist gemäß der Darstellung in Fig. 2a aus mehreren einzelnen Ferritplatten 111, 113, 115 gebildet, die zur Bildung des plattenförmigen Ferritkerns 110 zusammengefügt sind. Alternativ kann der plattenförmige Ferritkern 110 einteilig, insbesondere aus einem einzelnen plattenförmigen Ferritelement, gebildet sein, wobei in diesem Fall im plattenförmigen Ferritkern 110 entgegen der Darstellung in Fig. 2a keine Fügestellen vorhanden sind.

Gemäß einiger anschaulicher Ausführungsformen, wie in Fig. 2a beispielhaft dargestellt ist, kann der plattenförmige Ferritkern 110 seitliche Aussparungen 114 aufweisen, in die z.B. Anschlüsse 122, 124 des induktiven Bauelements platzsparend aufgenommen sind, wobei laterale Abmessungen des induktiven Bauelements gering gehalten werden. Zusätzlich oder alternativ können kapazitive Bauelemente (nicht dargestellt), wie etwa mindestens ein Kondensator, in die Aussparungen 114 aufgenommen sein.

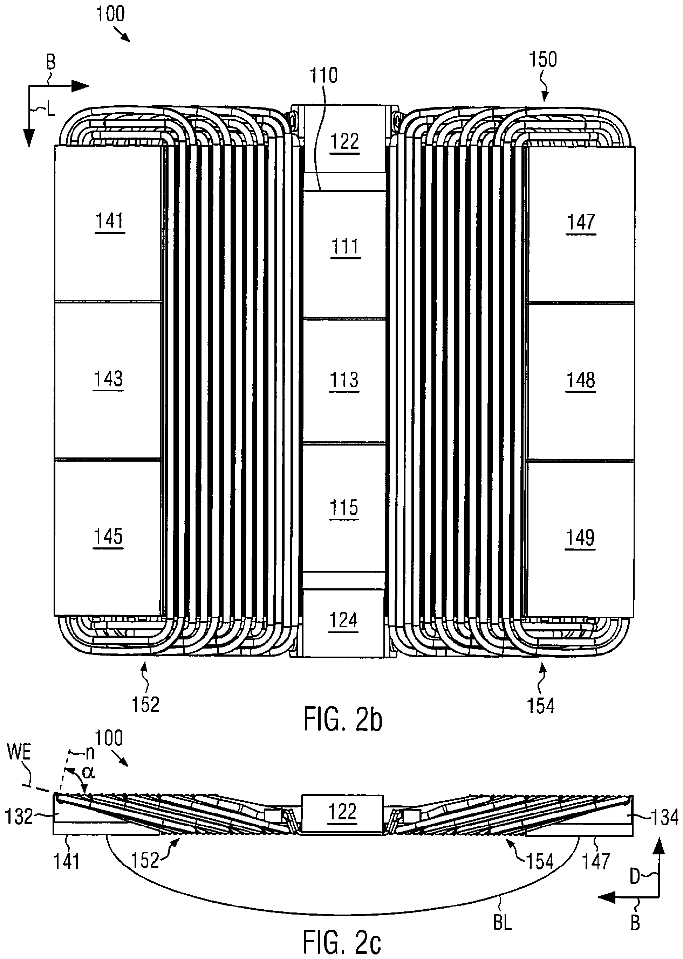

Gemäß beispielhaften Ausführungsformen sind die Aussparungen 114, wie in Fig. 2a beispielhaft veranschaulicht ist, als verjüngte Abschnitte des Ferritkerns 110 bereitgestellt, wobei eine laterale Abmessung des Ferritkerns 110 in den Aussparungen 114 kleiner ist als eine laterale Abmessung des Ferritkerns 110 außerhalb der Aussparungen 114 bezogen auf eine Längsrichtung des Ferritkerns 110, die hinsichtlich der Fig. 2a und 2b mit dem Bezugszeichen L bezeichnet wird. Eine Richtung senkrecht zur Längsrichtung L wird als Breitenrichtung bezeichnet und ist in den Fig. 2a-2d mit dem Bezugszeichen B versehen.

Gemäß anschaulicher Ausführungsformen der vorliegenden Erfindung kann für die Abmessungen in Längsrichtung L und Breitenrichtung B gelten: L > B, L ≈ B oder L < B.

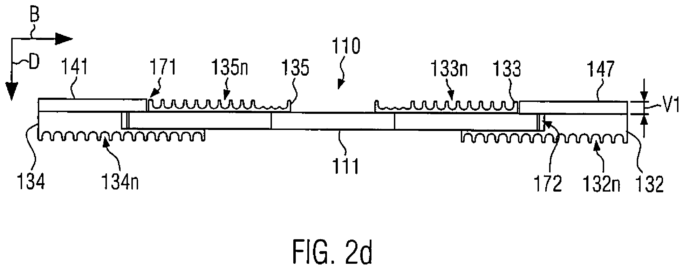

Eine Richtung senkrecht zu den Richtungen L, B ist in den Fig. 2c und 2d als Dickenrichtung D bezeichnet. Hinsichtlich der Dickenrichtung D weist der Ferritkern 110 Abmessungen auf, die kleiner sind als die Abmessungen entlang der Richtungen L und B: D < L, B.

Gemäß spezieller beispielhafter Ausführungsformen kann gelten: D < L/10 und/oder D < B/10. Gemäß bevorzugter Ausführungsformen ist D < L/20 und/oder D < B/20. Gemäß spezieller anschaulicher Beispiele hierin kann gelten: D < L/30 und/oder D < B/30. Die sich ergebenden Aspektverhältnisse bzgl. D und L, B bezeichnen den Ferritkern 110 anschaulich als "plattenförmigen Ferritkern" und einen Dickenrichtung wird mit einer Richtung identifiziert, entlang welcher der "plattenförmige Ferritkern" eine kleinste Abmessung aufweist, ohne dass Aussparungen, z.B. die Aussparungen 114, berücksichtigt werden.

Gemäß anschaulicher Ausführungsformen umfasst die Hybrid-Doppel-D-Solenoid-Spule 150 eine erste Wicklung 152 und eine zweite Wicklung 154, die jeweils eine Mehrzahl von (insbesondere zwei oder drei oder mehr) Windungen umfassen. In der in Fig. 2a dargestellten Aufsicht auf die Oberseite des induktiven Bauelements 100 ist die erste Wicklung 152 bzgl. der Breitenrichtung B an einem der zweiten Wicklung 154 gegenüberliegenden Ende des plattenförmigen Ferritkerns 110 angeordnet bzw. Windungsabschnitte der Mehrzahl von Windungen der ersten Wicklung 152 (beispielsweise die Windung 166 in Fig. 2a) erstrecken sich über wenigstens den größten Teil des plattenförmigen Ferritkerns 110 im Wesentlichen parallel zur Längsrichtung L. Fig. 2a zeigt hier den Spezialfall, dass sich die Windungsabschnitte über dem plattenförmigen Ferritkern 110 der ersten Wicklung 152 parallel zur Längsrichtung L erstrecken, solange die Windungsabschnitte der ersten Wicklung 152 in der in Fig. 2a dargestellten Ansicht direkt über dem plattenförmigen Ferritkern 110 verlaufen, während Windungsabschnitte seitlich des plattenförmigen Ferritkerns 110 einen bogenförmigen Verlauf annehmen und hinsichtlich der in Fig. 2a dargestellten Ansicht hinter dem plattenförmigen Ferritkern 110 zur Unterseite des induktiven Bauelements 100 geführt werden. Entsprechendes gilt auch für die zweite Wicklung 154. Dies stellt jedoch keine Beschränkung dar und es kann eine davon abweichende Orientierung der Windungsabschnitte umgesetzt werden, z.B. schief zur Längsrichtung L.

Die erste Wicklung 152 ist mit den Anschlüssen 122, 124 des induktiven Bauelements durch Anschlusskontakte 157, 158 elektrisch und mechanisch verbunden, wobei die Anschlusskontakte 157 und158 durch entsprechende Leitungsabschnitte 163 und 164 mit der Mehrzahl von Windungen der ersten Wicklung 152 verbunden sind. Die Anschlusskontakte 157, 158 und die Anschlüsse 122, 124 können durch beliebige Maßnahmen elektrisch und mechanisch miteinander verbunden sein, beispielsweise durch Crimpverbindung, Schraubverbindung, Steckverbindung, Lötverbindung und dergleichen. Entsprechend ist die zweite Wicklung 154 durch Anschlusskontakte 155, 156 mit den Anschlüssen 122, 124 verbunden, wobei der Anschlusskontakt 155 über den Leitungsabschnitt 161 mit der Mehrzahl von Windungen der ersten Wicklung 154 verbunden ist und der Anschlusskontakt 156 durch den Leitungsabschnitt 162 mit der Mehrzahl von Windungen der zweiten Wicklung 154 verbunden ist.

Die Leitungsabschnitte 161, 162, 163, 164 erstrecken sich im Wesentlichen parallel zur Breitenrichtung B seitlich des plattenförmigen Ferritkerns 110 und sind gemäß anschaulicher Ausführungsformen innenliegend geführt, wobei die Leitungsabschnitte 161, 162, 163, 164 gemäß anschaulichen Ausführungsformen entlang der Längsrichtung L mit geringerem Abstand zu den Seitenflächen des plattenförmigen Ferritkerns 110 verlaufen, als am weitesten beabstandete Windungsabschnitte der Mehrzahl von Windungen der ersten und zweiten Wicklungen 152, 154. Alternativ können die Leitungsabschnitte 161, 162, 163, 164 gemäß einer außenliegenden Umsetzungen der Leitungsabschnitte 161-164 unter größerem Abstand zum plattenförmigen Ferritkern 110 angeordnet sein, als die am weitesten außen liegenden Windungsabschnitte der Mehrzahl von Windungen der ersten und zweiten Wicklung 152, 154. In letzterem Fall (nicht dargestellt) werden die Leitungsabschnitte 161-164 von Windungsabschnitten der Mehrzahl von Windungen der ersten und zweiten Wicklungen 152, 154 nicht überlagert.

Mit Bezug auf Fig. 2b ist eine Aufsicht auf eine Unterseite des induktiven Bauelements 100 entgegen der Aufsichtsansicht auf die Oberseite gemäß der Darstellung in Fig. 2a dargestellt. Im Vergleich zwischen den Fig. 2a und 2b ergibt sich, dass Windungsabschnitte der Windungen der ersten und zweiten Wicklungen 152, 154, die in den dargestellten Aufsichtsansichten der Fig. 2a und 2b direkt über dem plattenförmigen Ferritkern 110 verlaufen, aufgrund einer Schrägstellung der Windungen der ersten und zweiten Wicklungen in 152, 154 im Falle der Oberseite in Fig. 2a relativ zur Breitenrichtung B z.B. mit größerem Abstand zueinander angeordnet sein können, als im Fall der Ansicht in Fig. 2b, die die Unterseite darstellt, in der die Windungsabschnitte der Windungen der ersten und zweiten Wicklungen 152, 154 entlang der Breitenrichtung B z.B. unter einem relativ zu Fig. 2b geringen Abstand geführt sind, so dass Polabschnitte 141, 143, 145 des plattenförmigen Ferritkerns 110 zu einem Ende des plattenförmigen Ferritkerns 110 in der Breitenrichtung B und bzgl. der Breitenrichtung B am entgegengesetzten Ende als freiliegende Polabschnitte 147, 148 und 149 gebildet sind, während in der Aufsicht auf die Oberseite in Fig. 2a lediglich der plattenförmigen Ferritkern 110 an dazwischen angeordneten Verbindungsabschnitten 111, 113, 115 freiliegt, die gemäß der Darstellung in Fig. 2b zwischen den Polabschnitten 141, 143, 145 und 147, 148, 149 angeordnet sind.

Mit Bezug auf Fig. 2c ist eine Seitenansicht des induktiven Bauelements 100 aus den Fig. 2a und 2b dargestellt, die beispielsweise aus Fig. 2b dadurch hervorgeht, dass das in Fig. 2b dargestellte induktiven Bauelement 100 aus der dargestellten Papierebene hochkant heraus gekippt wird, so dass seitlich senkrecht auf den Anschluss 122 geblickt wird. In der in Fig. 2c dargestellten Seitenansicht ist die Schrägstellung der Windungen der ersten und zweiten Wicklung in 152, 154 bzgl. der Breitenrichtung B ersichtlich, d.h., dass eine Normale zu einer Ebene gebildet durch eine Windung der ersten Wicklung 152 unter einem schrägen Winkel zur Breitenrichtung B orientiert ist, wie durch eine schematische Wickelebene WE in Fig. 2c bezüglich einer Normalen n bezeichnet ist, wobei ein Winkel α einen Winkel zwischen der Normalen n und der Breitenrichtung B bezeichnet. Der Winkel α ist ungleich 0° und kann gemäß spezieller anschaulicher Ausführungsformen z.B. größer oder gleich 5° (α ≥ 5°) sein, ohne hierdurch die vorliegende Erfindung zu beschränken. Entsprechendes gilt für die zweite Wicklung 154, wobei die erste Wicklung und die zweite Wicklung hinsichtlich einer parallel zur Dickenrichtung D orientierten Symmetrieachse zwischen der ersten und zweiten Wicklung spiegelsymmetrisch gewickelt sein können.

Gemäß anschaulicher Ausführungsformen, wie in den Fig. 2a bis 2c dargestellt ist, umfasst das induktiven Bauelement 100 einen Wickelkörper 130 mit einem ersten Halterungselement 132, das zur Aufnahme und Halterung der ersten Wickelung 152 konfiguriert ist, und einem zweiten Halterungselement 134, das zur Aufnahme und Halterung der zweiten Wicklung konfiguriert ist. Die Halterungselemente 132 können beispielsweise von einer länglichen plattenförmigen Gestalt sein, die den Ferritkern 110 entlang der Längsrichtung L wenigstens teilweise bedeckt und aus einem elektrisch isolierenden Material gebildet ist, beispielsweise durch Spritzguss oder dergleichen.

Hinsichtlich Fig. 2d ist der plattenförmigen Ferritkern 110 aus der Darstellung in Fig. 2c ohne den Anschluss 122 und die erste und zweite Wicklung 152, 154 mit Anschlusskontakten dargestellt. Gemäß der Darstellung in Fig. 2d sind insbesondere nur der plattenförmige Ferritkern 110 und der Wickelkörper 130 in Seitenansicht gezeigt.

Gemäß anschaulicher Beispiele der vorliegenden Erfindung, wie in Fig. 2d anschaulich dargestellt ist, weist der plattenförmigen Ferritkern 110 eine erste Abstufung 171 und eine zweite Abstufung 172 auf. Gemäß der Abstufung 171 ist eine freiliegende Oberfläche des Polabschnitts 141 entlang der Dickenrichtung D zum Verbindungsabschnitt 111 versetzt angeordnet, d.h. zwischen einer gleich orientierten Oberfläche des Verbindungsabschnitts 111 relativ zur freiliegenden Polfläche des Polabschnitts 141 wird durch die Abstufung 171 ein Versatz V1 gebildet. Entsprechend ist der Polabschnitt 147 zum Verbindungabschnitt 111 durch die Abstufung 172 versetzt, der Versatz V1 ist insbesondere zwischen der freiliegenden Polfläche des Polabschnitts 147 und der gleich orientierten Oberfläche des Verbindungsabschnitts 111 gebildet. Dies stellt keine Beschränkung der vorliegenden Erfindung dar und es kann anstelle der zwei Abstufungen 171, 172 lediglich eine der Abstufungen 171, 172 gebildet sein. Alternativ können die Abstufungen 171 und 172 derart gebildet sein, dass ein der Abstufung 171 zugeordneter Versatz ungleich einem Versatz ist, der der zweiten Abstufung 172 zugeordnet ist.

Gemäß der beispielhaften Darstellung in Fig. 2d weist der Wickelkörper 130 Halterungselemente 132, 133, 134, 135 auf, wobei die Halterungselemente 133, 135 neben den entsprechenden Abstufungen 171, 172 gebildet sind, so dass sie den Verbindungsabschnitt 111 teilweise überlagern, während der Polabschnitt 141 bzw. der Polabschnitt 147 durch das Halterungselement 135 bzw. 133 nicht überlagert wird. Hingegen sind die Halterungselemente 132, 134 derart gebildet, dass die Abstufungen 171, 172 auf der Oberseite des plattenförmigen Ferritkerns 110 durch die Halterungselemente 132, 134 überlagert werden.

Das Halterungselement 132 weist eine Mehrzahl von Nuten 132n auf, die gemäß der Darstellung in Fig. 2c der Anzahl von Windungen der zweiten Wicklung entsprechen. Das Halterungselement 133 weist eine Mehrzahl von Nuten 133n auf, die der Anzahl von Windungen der zweien Wicklung 154 entsprechen und der Anzahl von Nuten 132n des Halterungselements 132 korrespondieren. Entsprechendes gilt für die Halterungselemente 135 und 134 bzgl. der ersten Wicklung 152 aus der Darstellung in Fig. 2c.

Die Nuten 132n, 133n, 134n und 135n nehmen jeweils einen Windungsabschnitt einer Windung über der Oberseite bzw. der Unterseite des plattenförmigen Ferritkerns 110 auf und isolieren benachbarte Windungsabschnitte entlang der Oberseite bzw. Unterseite des plattenförmigen Ferritkerns 110 voneinander, so dass ein Windungskurzschluss verhindert werden kann, wenn z.B. auf eine Ummantelung von Windungsabschnitten verzichtet wird. Außerdem tragen die Halterungselemente 132, 133, 134, 135 zur mechanischen Fixierung und Stabilisierung der ersten und zweiten Wicklungen 152, 154 bei.

In Fig. 2d ist eine beispielhafte Ausgestaltung des Wickelkörpers 130 dargestellt, in der einige Nuten der Halterungselemente 133, 135 weniger tief sind bzw. weniger hohe Trennwände aufweisen. Diese beispielhaften Ausgestaltungen dienen lediglich zur Veranschaulichung von bauraumbedingten Ausgestaltungsmöglichkeiten der Halterungselemente 133, 135 und stellen keine Beschränkung der vorliegenden Erfindung dar. Alternativ können die Nuten des Halterungselements 133 und/oder 135 möglichst gleichförmig (d.h. mit möglichst gleichförmiger Tiefe bzw. gleichförmig hohen Trennwänden, wobei "möglichst" eine tolerierbare Abweichung vom Idealfall im Rahmen von Fertigungstoleranzen bedeutet, z.B. Abweichungen von etwa 5% oder etwa 10% von einem vorgegebenen Wert) gebildet sein.

Mit Bezug auf Fig. 2c wird eine Anschlusskonfiguration der ersten und zweiten Wicklung 152, 154 an die Anschlüsse 122, 124 des induktiven Bauelements 100 beschrieben. Die erste Wicklung 152 ist hierbei durch die Anschlusskontakte 157, 158 mit den Anschlüssen 122, 124 (vergleiche Fig. 2a hinsichtlich der Anschlusskontakte der ersten Wicklung 152) elektrisch verbunden und die zweite Wicklung 154 ist mit den Anschlüssen 122, 124 des induktiven Bauelements 100 mittels der Anschlusskontakte 155, 156 elektrisch verbunden. Bei Anlegen einer Spannung an die Anschlüsse 122, 124 des induktiven Bauelements 100 in der ersten Wicklung 152 und in der zweiten Wicklung 154 wird im Betrieb ein elektrischer Strom hervorgerufen, der die erste Wicklung 152 entsprechend des Windungssinns der ersten Wicklung 152 in einem ersten Drehsinn durchströmt, während die zweite Wicklung 154 entsprechend dem Windungssinn der zweiten Wicklung 154 mit einem zweiten Drehsinn durchströmt wird, wobei der erste Drehsinn und der zweite Drehsinn zueinander entgegengesetzt orientiert sind. Dies führt zu einem Magnetfeld, wie durch einen schematisch eingezeichnete B-Feldlinie BL in Fig. 2c dargestellt wird. Insbesondere tritt die B-Feldlinie BL aus einem der Polabschnitte 141, 147 aus und tritt in den anderen der Polabschnitte 141, 147 ein, wie durch die Orientierung des elektrischen Stroms in den ersten und zweiten Wicklungen 152, 154 bestimmt wird. Im plattenförmigen Ferritkern 110 erfolgt der Rückschluss der B-Feldlinie BL zwischen den Polabschnitten 141, 147 das induktiven Bauelement 100, das gemäß der Fig. 2a-2d beschrieben ist. Das induktive Bauelement 100 weist damit einen gute Kopplungseigenschaft zu einem weiteren nicht dargestellten induktiven Bauelement auf, wobei es gegenüber lateralen Versetzungen zweier induktiven Bauelemente zueinander im Vergleich zu einem Spulendesigns gemäß dem bekannten Spulendesign gemäß der Darstellung in Fig. 1a unempfindlich ist und gegenüber dem Spulendesign in Fig. 1b und 1c ein vorteilhaftes Kopplungsverhalten aufweist.

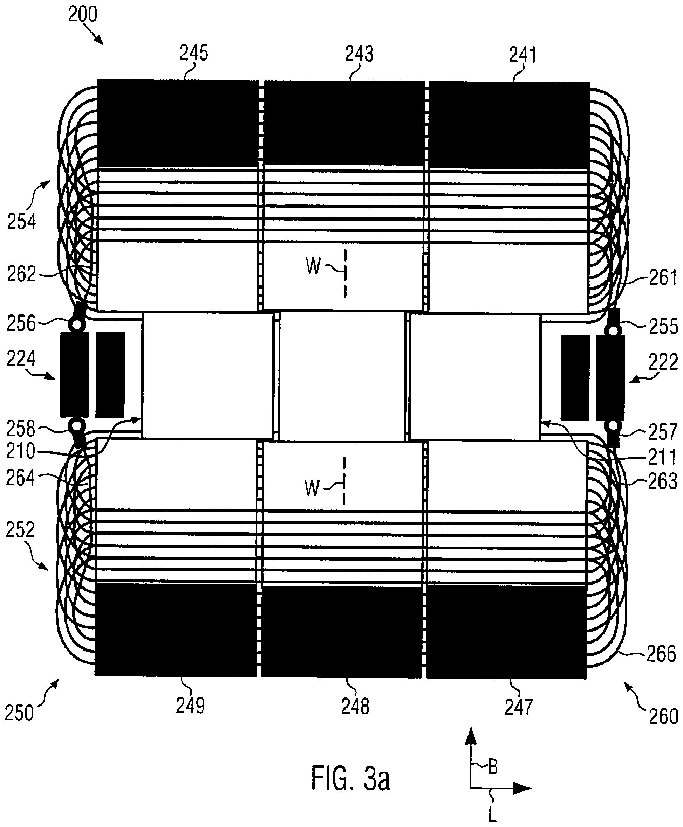

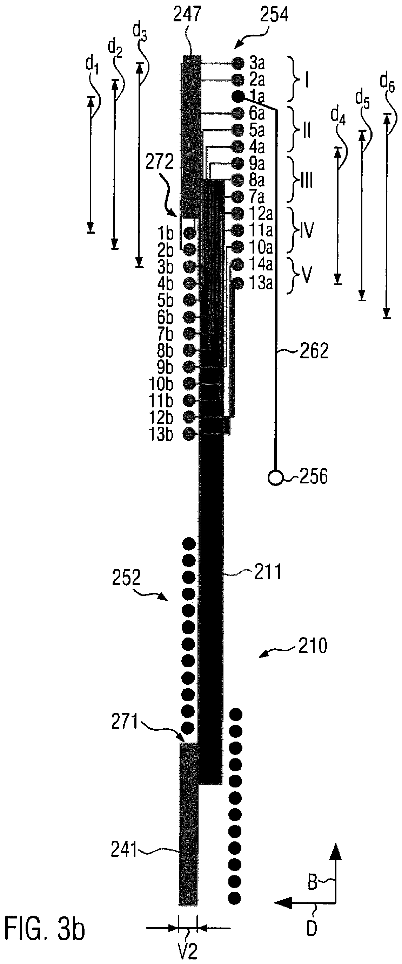

Mit Bezug auf die Fig. 3a und 3b wird ein Wicklungsschema gemäß anschaulicher Ausführungsform der vorliegenden Erfindung detaillierter beschrieben.

Fig. 3a zeigt hierbei schematisch ein induktives Bauelement 200 ähnlich dem induktiven Bauelement 100, das vorangehend beschrieben ist. Das induktive Bauelement 200 umfasst einen plattenförmigen Ferritkern 210 ähnlich dem plattenförmigen Ferritkern 110, der vorangehend beschrieben ist. Das induktive Bauelement 200 umfasst ferner eine Hybrid-Doppel-D-Solenoid-Spule 250, ähnlich der vorangehend beschriebenen Hybrid-Doppel-D-Solenoid-Spule 150. Die Hybrid-Doppel-D-Solenoid-Spule 250 umfasst eine erste Wicklung 252 und eine zweite Wicklung 254 jeweils mit einer Mehrzahl von Windungen, wobei in Fig. 3a schematisch lediglich eine Windung 266 dargestellt ist, die repräsentativ für weitere Windungen steht, welche übersichtshalber nicht mit Bezugszeichen versehen wurden. Die erste Wicklung 254 und die zweite Wicklung 252 stellen gleichfalls eine Mehrzahl von Windungen 260 bereit, insbesondere vier Windungen oder mehr.

Gemäß anschaulicher Ausführungsformen weist das induktive Bauelement 200 Anschlüsse 222, 224 ähnlich den Anschlüssen 122, 124 des oben beschriebenen induktiven Bauelements 100 auf, die mit Anschlusskontakten 255, 256, 257, 258 ähnlich den Anschlusskontakten 155, 156, 157, 158 des oben beschriebenen induktiven Bauelements 100 über Leitungsabschnitte 261, 262, 263, 264 ähnlich den oben beschriebenen Leitungsabschnitten 161, 162, 163, 164 des oben beschriebenen induktiven Bauelements 100 verbunden sind.

Ähnlich dem oben beschriebenen plattenförmigen Ferritkern 110 weist der plattenförmigen Ferritkern 210 einen Verbindungsabschnitt 211 und Polabschnitte 241, 243, 245 und 247, 248, 249 auf.

Gemäß anschaulichen Ausführungsformen kann der plattenförmige Ferritkern 210 aus einer Mehrzahl von Ferritplatten zusammengefügt oder aus einem einzelnen plattenförmigen Ferritkernelement gebildet sein.

In der Darstellung von Fig. 3a sind Projektionen von Windungsachsen der ersten und zweiten Wicklung 252, 254 schematisch mittels gestreichelter Linien eingezeichnet und mit dem Bezugszeichen "W" versehen, wobei die im Rahmen dieser Beschreibung definierten Windungsachsen als Normale zu Windungsebenen, die von Windungen gebildet werden, aufgrund der Schrägstellung der Windungen der ersten Wicklung 252 und aufgrund der Schrägstellung der Windungen der zweiten Wicklung 254 tatsächlich schräg aus der Papierebene herausragen bzw. mit einer Normalen der Papierebene eine Winkel ungleich 90° einschließen.

Dieses Verständnis der "Windungsachse" weicht dahingehend von dem Verständnis der Windungsachse aus Fertigungssicht ab, dass die Windungsachse W aus Fertigungssicht parallel und nicht schräg aus der Papierebene zur Hauptachse herausgerichtet ist. Im Herstellungsprozess ergibt sich die Windungsschrägstellung durch Nachführung der Litzenzuführung in Richtung B.

Die Breitenrichtung B, Längsrichtung L und Dickenrichtung D sind in den Fig. 3a und 3b ähnlich dem induktiven Bauelement gemäß der Darstellung in den Fig. 2a-2d definiert.

Mit Bezug auf Fig. 3b ist ein Wickelschema gemäß anschaulicher Ausführungsformen der vorliegenden Erfindung schematisch dargestellt, wobei zur besseren Veranschaulichung Verbindungslinien zwischen oberhalb und unterhalb des Verbindungsabschnitts 211 des plattenförmigen Ferritkerns 210 der zweiten Wicklung 254 durch Linien verbunden sind, um anzuzeigen, welcher oberseitiger Windungsabschnitt mit welchem entsprechenden unterseitigen Windungsabschnitt bzgl. des plattenförmigen Ferritkerns 210 verbunden ist.

Gemäß anschaulicher Ausführungsformen der vorliegenden Erfindung ist die zweite Wicklung 254 in eine erste Gruppe I, eine zweite Gruppe II, eine dritte Gruppe III, eine vierte Gruppe IV und eine fünfte Gruppe V gruppiert. Eine Reihenfolge der Nummerierung der Gruppen kann gemäß nicht beschränkender Ausführungsformen von dem Anschlusskontakt 256 über den Leitungsabschnitt 262 zur ersten Windung 1a-1b-2a verlaufen, die den plattenförmigen Ferritkern 210 einmal umläuft und die unmittelbar aufeinanderfolgenden Windungsabschnitte 1a, 2a und 1b umfasst.

Beispielsweise ist eine zweite Windung der ersten Gruppe I durch 2a-2b-3a gegeben und eine dritte Windung wird durch 3a-3b-4a gebildet.

Gemäß der schematischen Darstellung der Fig. 3b wird der ersten Windung 1a-1b-2a ein Windungsdurchmesser d₁ zugeordnet, der zweiten Windung 2a-2b-3a wird ein Windungsdurchmesser d₂ zugeordnet und der dritten Windung 3a-3b-4a wird der Windungsdurchmesser d₃ zugeordnet. Aufgrund des Wickelschemas gilt für die erste Gruppe I die folgende Beziehung zwischen den Windungsdurchmessern: d₁ < d₂ < d₃.

In anschaulichen Ausführungsformen ist eine erste Windung der zweiten Gruppe II ist durch 4a-4b-5a gegeben, eine zweite Windung der zweiten Gruppe II wird durch 5a-5b-6a gebildet und eine dritte Windung der zweiten Gruppe II wird durch 6a-6b-7a gebildet. Gemäß der schematischen Darstellung der Fig. 3b wird der ersten Windung 4a-4b-5a ein Windungsdurchmesser d₄ zugeordnet, der zweiten Windung 5a-5b-6a wird ein Windungsdurchmesser d₅ zugeordnet und der dritten Windung 6a-6b-7a wird ein Windungsdurchmesser d₆ zugeordnet. Aufgrund des Wickelschemas gilt für die zweite Gruppe II die folgende Beziehung zwischen den Windungsdurchmessern: d₄ < d₅ < d₆.

Gemäß der in Fig. 3b dargestellten anschaulichen Ausführungsformen sind die Windungen in einer Gruppe unmittelbar aufeinanderfolgend und zusammenhängend mit monoton zunehmendem Windungsdurchmesser. Dies stellt keine Beschränkung der vorliegenden Erfindung dar und alternativ kann der Windungsdurchmesser innerhalb einer Gruppe monoton abnehmen, beispielsweise unter Spiegelung der Nummerierung durch ausgehen von dem Anschlusskontakt 257 anstelle des Anschlusskontakts 256 (entspricht einem entgegengesetzten Windungssinn).

Das Konzept der Gruppen wird durch das Wicklungsschema eindeutig bestimmt, da der Übergang von einer der Gruppen I, II, III, IV, V zur entsprechend benachbarten Gruppe mit einer der Tendenz in der Gruppe entgegengesetzten Änderung des Windungsdurchmessers einhergeht: Zum Beispiel ist der Windungsdurchmesser der unmittelbar aufeinanderfolgenden und gruppenübergreifenden Windungen 3a-3b-4a und 4a-4b-5a beim Übergang von Gruppe I zu Gruppe II wie folgt: d₃ (entspricht Windungsdurchmesser der Windung 3a-3b-4a) > d₄ (entspricht Windungsdurchmesser der Windung 4a-4b-5a) entgegen der Tendenz d₁ < d₂ < d₃ innerhalb der ersten Gruppe I und d₄ < d₅ < d₆ innerhalb der zweiten Gruppe 11.

Entsprechend lässt sich anhand des Wicklungsschemas auch zwischen den weiteren Gruppen III, IV und V der zweiten Wicklung 254 unterscheiden.

Eine entsprechende Betrachtung überträgt sich analog auf das Wicklungsschema der ersten Wicklung 252, worauf übersichtshalber an dieser Stelle verzichtet wird.

Gemäß anschaulicher Ausführungsformen der vorliegenden Erfindung ist die erste Windung der ersten Gruppe ausgehend vom Anschlusskontakt 256, d.h., die Windung 1a-1b-2a, nicht als äußerste Windung bzw. als Windung, die dem Ende des Polabschnitts 247 in der Breitenrichtung B am nächstens angeordnet ist, gebildet. Vielmehr sind die auf die erste Windung der ersten Gruppe I unmittelbar folgenden Windungen der ersten Gruppe I zum Ende des Polabschnitts 247 sukzessive nach außen gewickelt, so dass eine Vergrößerung der Wickeldurchmesser innerhalb der ersten Gruppe I bereitgestellt wird. Die sich an die erste Gruppe anschließende zweite Gruppe II ist bzgl. der ersten Gruppe I hinsichtlich der in Fig. 3b dargestellten Ausführungsform zum Verbindungabschnitt 211 hin näher liegend gewickelt, wobei die in den Fig. 3b dargestellten Ausführungsform ausgehend vom Anschlusskontakt 256 chronologisch gewickelte Gruppen mit größerem Abstand zum Ende des Polabschnitts 247 und näher zum Verbindungsabschnitt 211 hin gewickelt werden. Dadurch wird eine ineinander verschachtelte bzw. verteilte Wickelung über den Seitenflächen erreicht, die über den Seitenflächen eine gleichförmige und reduzierte Ausbauchung gegenüber nicht gruppierten Wickelschemata bereitstellt, in denen die Ausbauchung mit dem Windungsdurchmesser entlang der Windungen monoton zunimmt.

Gemäß der in Fig. 3b dargestellten Ausführungsform kann die Wicklung über der Oberseite und Unterseite des plattenförmigen Ferritkerns 210 einlagig gewickelt sein. Hierbei sind Leitungsabschnitte, die über der Oberseite und der Unterseite des plattenförmigen Ferritkerns 210 verlaufen, beispielsweise die Windungsabschnitte 1a-13a und die Windungsabschnitte 1b-13b in Fig. 3b, einlagig gewickelt. Dies ermöglicht eine geringe Bauhöhe entlang der Dickenrichtung D des induktiven Bauelements 200.

Ähnlich dem induktiven Bauelements 100, das hinsichtlich der Fig. 2a-2d oben beschrieben ist, sind die Polabschnitte 241 und 247 gemäß der Darstellung in Fig. 3b, sowie die weiteren Polabschnitte 243, 245, 248, 249 gemäß der Darstellung in Fig. 3a entlang der Dickenrichtung D zum Verbindungsabschnitt 211 versetzt (mit Versatz) angeordnet. Die über der Unterseite des plattenförmigen Ferritkern 210 angeordneten Windungsabschnitte 1b-13b sind über dem Verbindungabschnitt und insbesondere neben einer durch den Versatz des Polabschnitts 247 zum Verbindungsabschnitt 211 gebildeten Abstufung 272 angeordnet, so dass zum einen die Polabschnitte 247, 248, 249 frei liegen und andererseits die Bauhöhe des induktiven Bauelements 200 an der Unterseite nicht über ein Höhenniveau der freiliegenden Oberfläche der Polabschnitte 247, 248, 249 hinaus erhöht wird. Entsprechendes gilt für die erste Wicklung 252 und eine Abstufung 271 zwischen den Polabschnitten 241, 243, 245 und dem Verbindungsabschnitt 211. Dadurch lässt sich das Kopplungsverhalten des induktiven Bauelements 200 zu einem weiteren nicht dargestellten induktiven Bauelement vorteilhaft einstellen, so wie die Bauhöhe der induktiven Bauelements 200 zur Unterseite des induktiven Bauelements 200 hin gering halten.

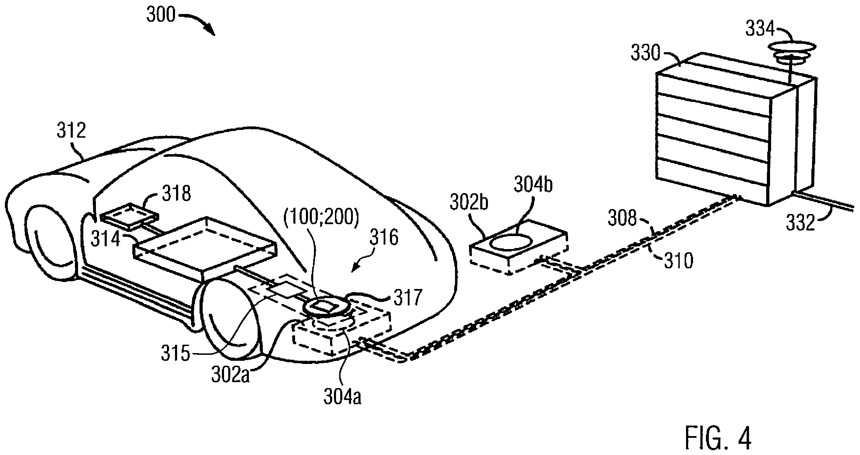

Mit Bezug auf Fig. 4 wird nun ein Ladesystem 300 zum Laden eines Elektrofahrzeugs 312 beschrieben.

Gemäß der Darstellung in Fig. 4 sind im Ladesystem 300 Primärresonatoreinrichtungen 302a und 302b mit primärseitigen induktiven Bauelementen 304a, 304b bereitgestellt, die beispielsweise an einem Parkplatz oder in einer Garage positioniert sind und in den Boden eingelassen sein können. Die Primärresonatoreinrichtungen 302a, 302b sind über entsprechende Verbindungsleitungen 308, 310 mit einer Stromverteilungseinrichtung 330 verbunden, die wiederum über eine Leitung 332 mit dem Stromnetz verbunden ist. Der Stromverteiler 330 kann beispielsweise eine Kommunikationseinheit 334 aufweisen, die mit einer oder mehreren externen Steuereinheiten (nicht dargestellt) in Verbindung stehen kann,

Fahrzeugseitig ist in dem Elektrofahrzeug 312 eine Energiespeichereinrichtung 318 vorgesehen, beispielsweise eine aufladbare Batterie bzw. ein aufladbares System aus Akkumulatorzellen, die über eine Ladesteuerung 314 mit einer Sekundärresonatoreinrichtung 316 verbunden ist. Die Sekundärresonatoreinrichtung 316 kann beispielsweise ein Gehäuse 317 umfassen, in das ein induktives Bauelement aufgenommen ist, wie hinsichtlich der Fig. 2a-3b oben beschrieben ist (vergleiche induktive Bauelemente 100; 200). Das Gehäuse 317 kann zur mechanischen Montage am Elektrofahrzeug 312, beispielsweise am Unterboden des Elektrofahrzeugs 312, ausgebildet sein. Die Sekundärresonatoreinrichtung 316 kann weiterhin ein kapazitives Bauelement 315 umfassen, das zusammen mit dem induktiven Bauelement eine elektromagnetische Resonatorschaltung bildet.

Beim Parken des Elektrofahrzeugs 312 über einer der Primärresonatoreinrichtungen 302a, 302b kann beispielsweise durch eine Kommunikation zwischen der Ladesteuerung 314 und dem Stromverteiler 330 über die Kommunikationseinrichtung 334 ein Ladevorgang eingeleitet werden, der wobei die Primärresonatoreinrichtung, über der das Elektrofahrzeug 312 geparkt wurde, im Beispiel von Fig. 4 die Primärresonatoreinrichtung 302a, betrieben wird. Mittels Nahfeldübertragung erfolgt eine induktive Kopplung zwischen der Primärresonatoreinrichtung 302a und der Sekundärresonatoreinrichtung 316, die elektromagnetische Energie von der Primärresonatoreinrichtung 302a aufnimmt und über die Ladesteuerung 314 (beispielsweise geeignete Gleichrichterschaltung umfassend) den Energiespeicher 318 lädt. Hierbei kann ein Ladezustand des Energiespeichers 318 durch die Ladesteuerung 314 überwacht werden und bei Erreichen eines gewünschten Ladezustands kann durch Kommunikation mit dem Stromverteiler 330 der Ladevorgang beendet werden. Das Ladesystem 300 kann dazu ausgebildet sein, die Gegenwart eines Gegenstandes bzw. Lebewesens zwischen der Sekundärresonatoreinrichtung 316 und der Primärresonatoreinrichtung 302a bzw. 302b zu erfassen und entsprechend einen Ladevorgang bei Erfassung eines positiven Ereignisses ("Gegenstand oder Lebewesen auf Primärresonatoreinrichtung bzw. in zu großer Nähe dazu") kann der Ladevorgang unterbrochen werden.

## Patentansprüche

1. Induktives Bauelement (100; 200) für ein berührungsloses Ladesystem für Elektroautos mit einem plattenförmigen Ferritkern (110; 210) und einer über dem plattenförmigen Ferritkern (110; 210) angeordneten Hybrid-Doppel-D-Solenoid-Spule (150; 250) mit einem Design, das eine Mischung zwischen einem Doppel-D-Spulendesign und einem Solenoid-Spulendesign darstellt,
wobei die Hybrid-Doppel-D-Solenoid-Spule (150; 250) eine Mehrzahl von Windungen (160; 260) aufweist,
**dadurch gekennzeichnet, dass** die Mehrzahl von Windungen (160; 260) in mindestens zwei Gruppen jeweils aus mindestens zwei unmittelbar aufeinanderfolgenden Windungen gruppiert ist, die in einer Gruppe jeweils monoton zunehmende oder abnehmende Windungsdurchmesser aufweisen,
wobei die letzte Windung einer Gruppe:
- einen gegenüber der ersten Windung der folgenden Gruppe größeren Windungsdurchmesser aufweist, wenn der Windungsdurchmesser von der, der letzten Windung innerhalb der Gruppe unmittelbar vorrangehenden Windung kleiner ist als der Windungsdurchmesser der letzten Windung der Gruppe,
oder
- einen gegenüber der ersten Windung der folgenden Gruppe kleineren Windungsdurchmesser aufweist, wenn der Windungsdurchmesser von der, der letzten Windung innerhalb der Gruppe unmittelbar vorrangehenden Windung größer ist als der Windungsdurchmesser der letzten Windung der Gruppe.

2. Induktives Bauelement (100; 200) nach Anspruch 1, wobei der plattenförmige Ferritkern (110; 210) mindestens eine Abstufung aufweist (171, 172; 271), die von der Hybrid-Doppel-D-Solenoid-Spule (150; 250) wenigstens teilweise überlagert wird.

3. Induktives Bauelement (100; 200) nach Anspruch 2, wobei die mindestens eine Abstufung (171, 172; 271) in zwei einander gegenüberliegenden Flächen des plattenförmigen Ferritkerns (110; 210) gebildet ist, die senkrecht zu einer Dickenrichtung (D) des plattenförmigen Ferritkerns (110; 210) orientiert sind, und in jeder der zwei einander gegenüberliegenden Flächen entlang der Dickenrichtung einen Versatz (V1; V2) bereitstellt.

4. Induktives Bauelement (100; 200) nach Anspruch 1, wobei die Hybrid-Doppel-D-Solenoid-Spule (150; 250) eine über dem plattenförmigen Ferritkern (110; 210) angeordnete erste Wicklung (152; 252) mit einer ersten Mehrzahl von Windungen und ersten Anschlusskontakten (155, 156; 255, 256) und eine zweite Wicklung (154; 254) mit einer zweiten Mehrzahl von Windungen und zweiten Anschlusskontakten (157, 158; 257, 258) umfasst, wobei die ersten und zweiten Anschlusskontakte (155-158; 255-258) mit Anschlüssen (122, 124; 222, 224) des induktiven Bauelements (100;
200) derart verbunden sind, so dass die erste Wicklung (152; 252) und die zweite Wicklung (154; 254) unter Anlegen einer Spannung an die Anschlüsse (122, 124; 222, 224) unter einem relativ zueinander entgegengesetzten Drehsinn von einem elektrischen Strom durchflossen werden.

5. Induktives Bauelement (100; 200) nach Anspruch 4, wobei der plattenförmige Ferritkern (110; 210) zwei Polabschnitte (141, 143, 145, 147, 148, 149; 241, 243, 245, 247, 248, 249), die relativ zu einer Richtung erhalten durch eine Projektion einer Windungsachse (W) der ersten Wicklung (152; 252) und/oder zweiten Wicklung (154; 254) auf den plattenförmigen Ferritkern (110; 210) an entgegengesetzten Enden des plattenförmigen Ferritkerns (110; 210) angeordnet sind, und einen zwischen den Polabschnitten (141, 143, 145, 147, 148, 149; 241, 243, 245, 247, 248, 249) angeordneten Verbindungsabschnitt (111, 113, 115; 211, 213, 215) aufweist, wobei jeder Polabschnitt unter Ausbildung einer Abstufung (171, 172; 271, 272) im Ferritkern (110; 210) von dem Verbindungsabschnitt (111, 113, 115; 211, 213, 215) entlang einer Dickenrichtung (D) des plattenförmigen Ferritkerns (110; 210) versetzt angeordnet ist.

6. Induktives Bauelement (100; 200) nach Anspruch 5, wobei jeder Polabschnitt eine wenigstens teilweise freiliegende Polfläche aufweist, die senkrecht zur Dickenrichtung (D) orientiert ist und nicht von Windungsabschnitten überlagert wird.

7. Induktives Bauelement (100; 200) nach einem der Ansprüche 1 bis 6, wobei die Hybrid-Doppel-D-Solenoid-Spule (150; 250) über Flächen des plattenförmigen Ferritkerns (110; 210), die senkrecht zu einer Dickenrichtung (D) des plattenförmigen Ferritkerns (110; 210) orientierten sind, einlagig gewickelt ist.

8. Induktives Bauelement (100; 200) nach einem der Ansprüche 1 bis 7, ferner umfassend einen Wickelkörper (130), der mindestens ein auf einer Fläche des plattenförmigen Ferritkerns (110; 210) angeordnetes Halterungselement (132, 134; 232, 234) aufweist, das jeweils eine Mehrzahl von Nuten (132n, 134n; 232n, 234n) aufweist, die jeweils genau einen Windungsabschnitt der über dem Halterungselement (132, 134; 232, 234) angeordneten Windungen aufnimmt.

9. Induktives Bauelement nach einem der Ansprüche 1 bis 8, wobei Leitungsabschnitte (161, 162, 163, 164; 261, 262, 263, 264), die sich von Anschlusskontakten (155, 156, 157, 158; 255, 256, 257, 258) zu Windungen erstrecken, seitlich innenliegend geführt sind und die Leitungsabschnitte (161, 162, 163, 164; 261, 262, 263, 264) von Windungsabschnitten überlagert werden.

10. Sekundärresonatoreinrichtung (316) zur Montage an einem Elektrokraftfahrzeug (312), umfassend ein Gehäuse (317), ein kapazitives Bauelement (315) und das induktive Bauelement (100; 200) nach einem der Ansprüche 1 bis 9, wobei zumindest induktive Bauelement (100; 200) in das Gehäuse (317) aufgenommen ist.

## Claims

1. Inductive device (100; 200) for a contactless charging system for electric cars, the inductive device comprising a plate-shaped ferrite core (110; 210) and a hybrid double-D solenoid coil (150; 250) that has a design which represents a combination of a double-D coil design and a solenoid coil design and that is disposed over the plate-shaped ferrite core (110; 210),
wherein the hybrid double-D solenoid coil (150; 250) comprises a plurality of turns (160; 260),
**characterized in that** the plurality of turns (160; 260) is grouped to at least two groups of at least two immediately consecutive turns each having in one group monotonically increasing or decreasing turn diameters,
wherein the last turn of a group has :
- a turn diameter that is larger than that of the first turn of the following group if the turn diameter of the turn immediately preceding the last turn within the group is smaller than the turn diameter of the last turn of the group,
or
a turn diameter that is smaller than that of the first turn of the following group if the turn diameter of the turn immediately preceding the last turn within the group is larger than the turn diameter of the last turn of the group.

2. Inductive device (100; 200) according to claim 1, wherein the plate-shaped ferrite core (110; 210) comprises at least one stepping (171, 172; 271) which is at least in part overlaid by the hybrid double-D solenoid coil (150).

3. Inductive device (100; 200) according to claim 2, wherein the at least one stepping (171, 172; 271) is formed in two oppositely disposed surfaces of the plate-shaped ferrite core (110; 210) which are oriented perpendicular to a thickness direction (D) of the plate-shaped ferrite core (110; 210), and provides an offset (V1; V2) in each of the two oppositely disposed surfaces along the thickness direction.

4. Inductive device (100; 200) according to claim 1, wherein the hybrid double-D solenoid coil (150; 250) comprises a first winding (152; 252) disposed over the plate-shaped ferrite core (110; 210) and having a first plurality of turns and first terminal contacts (155, 156; 255, 256), and a second winding (154; 254) having a second plurality of turns and second terminal contacts (157, 158; 257, 258), wherein the first and second terminal contacts (155-158; 255-258) are connected to terminals (122, 124; 222, 224) of the inductive device (100; 200) such that, upon a voltage being applied to the terminal contacts (122, 124; 222, 224), an electric current passing through the first winding {152; 252) and the second winding (154; 254) has a mutually opposite rotational direction.

5. Inductive device (100; 200) according to claim 4, wherein the plate-shaped ferrite core (110; 210) comprises two pole sections (141, 143, 145, 147, 148, 149; 241, 243, 245, 247, 248, 249), which are arranged at opposite ends of the plate-shaped ferrite core (110; 210) relative to a direction obtained by projecting a turn axis (W) of the first winding (152; 252) and/or the second winding (154; 254) onto the plate-shaped ferrite core (110; 210), and a connecting section 111, 113, 115; 211, 213, 215) arranged between the pole sections (141, 143, 145, 147, 148, 149; 241, 243, 245, 247, 248, 249), wherein each pole section is arranged offset from the connecting section (111,113,115; 211,213,215) along a thickness direction (D) of the plate-shaped ferrite core, while forming a stepping (171, 172; 271, 272) in the ferrite core (110; 210).

6. Inductive device (100; 200) according to claim 5, wherein each pole section has a pole surface that is at least in part exposed and oriented perpendicular to the thickness direction (D) and is not overlaid by winding sections.

7. Inductive device (100; 200) according to one of the claims 1 to 6, wherein the hybrid double-D solenoid coil (150; 250) is wound in a single layer over surfaces of the plate-shaped ferrite core (110; 210) which are oriented perpendicular to a thickness direction (D) of the plate-shaped ferrite core (110, 210).

8. Inductive device (100; 200) according to one of the claims 1 to 7, further comprising a winding element (130) having arranged on a surface of the plate-shaped ferrite core (110; 210) at least one support member (132, 134; 232, 234) which comprises a respective plurality of grooves (132n, 134n; 232n, 234n), each of which receiving exactly one turn section of the turns arranged over the support member (132, 134; 232, 234).

9. Inductive device according to one of the claims 1 to 8, wherein lead sections (161, 162, 163, 164, 261, 262, 263, 264) extending from terminal contacts (155, 156, 157, 158; 255, 256, 257, 258) to turns are routed laterally on the inside and the lead sections (161, 162, 163, 164; 261, 262, 263, 264) are overlaid by turn sections.

10. Secondary resonator device (316) for mounting to an electric motor vehicle (312) comprising a housing (317), a capacitive component (315) and the inductive device (100; 200) according to one of the claims 1 to 9, wherein at least the inductive device (100, 200) is accommodated into the housing (317).

## Revendications

1. Composant inductif (100 ; 200) pour un système de charge sans fil pour voitures électriques avec un noyau en ferrite en forme de plaque (110 ; 210) et une bobine solénoïde à double D hybride (150 ; 250) agencée autour du noyau en ferrite en forme de plaque (110 ; 210) avec une conception qui représente un mélange entre une conception de bobine à double D et une conception de bobine solénoïde,
dans lequel la bobine solénoïde à double D hybride (150 ; 250) comporte une pluralité d'enroulements (160 ; 260),
**caractérisé en ce que** la pluralité d'enroulements (160 ; 260) dans au mois deux groupes est regroupée respectivement en au moins deux enroulements immédiatement successifs, qui présentent dans un groupe un diamètre d'enroulement uniformément croissant ou décroissant,
dans lequel le dernier enroulement d'un groupe :
- présente un diamètre d'enroulement supérieur à celui du premier enroulement du groupe suivant, quand le diamètre d'enroulement de l'enroulement précédant immédiatement le dernier enroulement dans le groupe est inférieur au diamètre d'enroulement du dernier enroulement du groupe, ou
- présente un diamètre d'enroulement inférieur à celui du premier enroulement du groupe suivant, quand le diamètre d'enroulement de l'enroulement précédant immédiatement le dernier enroulement dans le groupe est supérieur au diamètre d'enroulement du dernier enroulement du groupe.

2. Composant inductif (100 ; 200) selon la revendication 1, dans lequel le noyau en ferrite en forme de plaque (110 ; 210) comporte au moins un échelonnement (171, 172 ; 271), qui est recouvert au moins partiellement par la bobine solénoïde à double D hybride (150 ; 250).

3. Composant inductif (100 ; 200) selon la revendication 2, dans lequel ledit au moins un échelonnement (171, 172 ; 271) est constitué de deux surfaces opposées du noyau en ferrite en forme de plaque (110 ; 210), qui sont orientées perpendiculairement à la direction de l'épaisseur (D) du noyau en ferrite en forme de plaque (110 ; 210), et produit un décalage (V1 ; V2) dans chacune des deux surfaces opposées en direction de l'épaisseur.

4. Composant inductif (100 ; 200) selon la revendication 1, dans lequel la bobine solénoïde à double D hybride (150 ; 250) comporte un premier bobinage (152 ; 252) agencé autour du noyau en ferrite en forme de plaque (110 ; 210) avec une première pluralité d'enroulements et des premiers contacts de connexion (155, 156 ; 255, 256), et un deuxième bobinage (154 ; 254) avec une deuxième pluralité d'enroulements et des deuxièmes contacts de connexion (157, 158 ; 257, 258), dans lequel les premier et deuxième contacts de connexion (155-158 ; 255-258) sont connectés avec des connexions (122, 124 ; 222, 224) du composant inductif (100 ; 200) de telle sorte que le premier bobinage (152 ; 252) et le deuxième bobinage (154 ; 254) sont traversés par un courant électrique dans un sens de rotation opposé d'un bobinage par rapport à l'autre par l'application d'une tension aux connexions (122, 124 ; 222, 224) .

5. Composant inductif (100 ; 200) selon la revendication 4, dans lequel le noyau en ferrite en forme de plaque (110 ; 210) comporte deux sections polaires (141, 143, 145, 147, 148, 149 ; 241, 243, 245, 247, 248, 249) qui sont agencées, par rapport à une direction obtenue par projection de l'axe d'enroulement (W) du premier bobinage (152 ; 252) et/ou du deuxième bobinage (154 ; 254) sur le noyau en ferrite en forme de plaque (110 ; 210), à des extrémités opposées du noyau en ferrite en forme de plaque (110 ; 210), et une section de connexion (111, 113, 115 ; 211, 213, 215) agencée entre les sections polaires (141, 143, 145, 147, 148, 149 ; 241, 243, 245, 247, 248, 249), dans lequel chaque section polaire est agencée de manière décalée en formant un échelonnement (171, 172 ; 271, 272) dans le noyau en ferrite (110 ; 210) depuis la section de connexion (111, 113, 115 ; 211, 213, 215) selon la direction de l'épaisseur (D) du noyau en ferrite en forme de plaque (110 ; 210).

6. Composant inductif (100 ; 200) selon la revendication 5, dans lequel chaque section polaire comporte une surface polaire au moins partiellement exposée, qui est orientée perpendiculairement à la direction de l'épaisseur (D) et n'est pas recouverte par des sections d'enroulement.

7. Composant inductif (100 ; 200) selon l'une des revendications 1 à 6, dans lequel la bobine solénoïde à double D hybride (150 ; 250) est enroulée en une seule couche sur des surfaces du noyau en ferrite en forme de plaque (110 ; 210), qui sont orientées perpendiculairement à la direction de l'épaisseur (D) du noyau en ferrite en forme de plaque (110 ; 210).

8. Composant inductif (100 ; 200) selon l'une des revendications 1 à 7, comprenant en outre un corps de bobinage (130) qui comporte au moins un élément de support (132, 134 ; 232, 234) agencé sur une surface du noyau en ferrite en forme de plaque (110 ; 210), qui comporte respectivement une pluralité de rainures (132n, 134n ; 232n, 234n) recevant chacune exactement une section d'enroulement des enroulements agencés sur l'élément de support (132, 134 ; 232, 234).

9. Composant inductif selon l'une des revendications 1 à 8, dans lequel des sections de conduite (161, 162, 163, 164 ; 261, 262, 263, 264) s'étendent depuis les contacts de connexion (155, 156, 157, 158 ; 255, 256, 257, 258) jusqu'aux enroulements, sont conduites latéralement vers l'intérieur, et sont recouvertes par les sections d'enroulement.

10. Dispositif de résonateur secondaire (316) destiné à être monté dans un véhicule électrique (312), comprenant un boîtier (317), un composant capacitif (315), et le composant inductif (100 ; 200) selon l'une des revendications 1 à 9, dans lequel au moins le composant inductif (100 ; 200) est logé dans le boîtier (317).
